# EUROPEAN PATENT SPECIFICATION

(11) **EP 2 623 379 B1**
(45) Date of publication and mention of the grant of the patent: **05.06.2019**
(21) Application number: 11828037.9
(22) Date of filing: 25.08.2011
(51) Int. Cl.: B60S 5/06, B60K 1/04, H02J 7/00, H01M 10/46, B60L 11/18

(54) **ELECTRIC COMMERCIAL VEHICLE BATTERY REPLACEMENT APPARATUS AND BATTERY SWAP SYSTEM**
VORRICHTUNG ZUM AUSTAUSCHEN DER BATTERIE EINES ELEKTRISCHEN NUTZFAHRZEUGS UND BATTERIEAUSTAUSCHSYSTEM
APPAREIL DE REMPLACEMENT DE BATTERIE DE VÉHICULE COMMERCIAL ÉLECTRIQUE ET SYSTÈME DE PERMUTATION DE BATTERIE

(30) Priority: 30.09.2010 CN 201010508008
(43) Date of publication of application: 07.08.2013
(73) Proprietor: State Grid Corporation of China (SGCC), Beijing 100031 (CN); XJ Group Co., Ltd., Henan 461000 (CN); XJ Power Co., Ltd., Xuchang, Henan 461000 (CN)
(72) Inventor: WANG, Xiangqin, Beijing 100031 (CN); HU, Jiangyi, Beijing 100031 (CN); JIA, Junguo, Beijing 100031 (CN); QIU, Jinxuan, Beijing 100031 (CN); XU, Wufeng, Xuchang Henan 461000 (CN); ZHANG, Dongjiang, Xuchang Henan 461000 (CN); YU, Wenbin, Xuchang Henan 461000 (CN); DONG, Xinsheng, Xuchang Henan 461000 (CN); LIAN, Zhanwei, Xuchang Henan 461000 (CN); HAO, Zhanduo, Xuchang Henan 461000 (CN)
(74) Representative: Lavoix
(86) International application number: PCT/CN2011/078921
(87) International publication number: WO 2012/041141

(56) References cited:
- WO-A2-2005/035288
- WO-A2-2005/035288
- CN-A- 1 467 108
- CN-A- 1 467 108
- CN-A- 101 214 814
- CN-A- 101 284 524
- CN-A- 101 834 455
- CN-A- 101 992 754
- CN-A- 102 040 010
- CN-U- 201 538 304
- CN-U- 201 856 741
- CN-U- 201 881 868
- DE-A1-102007 032 210
- US-A1- 2008 294 283

## Description

### TECHNICAL FIELD

The invention relates to the field of energy utilization technology, in particular to a battery replacement device and system suitable for electric commercial vehicles.

### BACKGROUND

As an important part of the new energy strategy and intelligent power grids, as well as one of the strategic emerging industries determined by the State Council, electric vehicles will gradually become a focus in the China's automobile industry and energy industry development. In the commercialization and industrialization process of electric vehicles, especially, electric commercial vehicles, how to power electric vehicles is an extremely important influence factor. Well developed energy supply systems will become a critical support for the use of electric vehicles.

Electric commercial vehicles are characterized by having a lot of battery packs, in most cases, up to 12 sets, which may occupy a large space. However, current battery replacement facilities usually employ semiautomatic or manually operated battery replacement devices, for the replacement process of a mass of batteries, the replacement time is relatively long and the handling is difficult, leading to a large amount of human/material resource consumption. For battery replacement facilities, since the longer turn-around time of the batteries of electric commercial vehicles, the utilization of their battery chargers is relatively low.

DE102007032210A1, which is published on October 30, 2008, discloses a method and device for replacing batteries for electric vehicles and electric vehicle. Fig. 8 of DE102007032210A1 illustrates a battery exchange device. The battery exchange device comprises: a head unit (67) with a release element (64) for introducing into a fixing element (60) of a battery; and a plurality of arms (68) each of which has a receiver surface (70) for engaging on the receiver points(52, 53) of the battery. The whole head unit (67) can be rotated about its longitudinal axis and moved up and down, and can also perform translation movement.

CN101284524A discloses a system for quickly exchange an electric vehicle power battery pack according to the preamble of claim 1. Fig. 1-1 of CN101284524A illustrates such a system. In said system, the shifting carriage, the lifter and the entire frame as constituted by a plurality of vertical posts are all installed on the turntable. If the battery pack is to be rotated, then the shifting carriage, the lifter and the entire frame as constituted by the plurality of vertical posts all must be rotated.

### SUMMARY

The object of this invention is to provide a battery replacement device and a battery replacement system for electric commercial vehicles, which can improve the stability and the safety of the battery replacement device.

In order to achieve the above object, a battery replacement device used for electric commercial vehicles is provided in this invention, comprising:
a main frame;
a positioning mechanism composed of a vertical positioning mechanism and a horizontal positioning mechanism, wherein the vertical positioning mechanism is provided in the main frame, for sliding to a preset position along vertical posts of the main frame according to a console command; the horizontal positioning mechanism is provided under the main frame, for carrying and sliding the main frame along a horizontal guide rail on the ground to a preset position according to a console command;
a rotation mechanism provided under the vertical positioning mechanism, for rotating on the vertical positioning mechanism by a preset angle according to a console command;
a lateral movement mechanism provided on the rotation mechanism, for according to a console command laterally shifting by a preset displacement along the rotation mechanism in a direction vertical to the horizontal guide rail;
a push-pull mechanism provided on the lateral movement mechanism, for according to a console command performing a push-pull action on a battery pack,
wherein the battery replacement device is characterized in that: the main frame comprises a bottom, a top frame and a plurality of vertical posts vertically arranged between the bottom and top frame,
wherein, the vertical positioning mechanism comprises an elevator frame, an elevator actuating mechanism and an elevator driving mechanism, wherein the elevator frame is provided in a space surrounded by the vertical posts, and can slide along the vertical posts; the elevator actuating mechanism actuates the elevator driving mechanism according to a console command to move the elevator frame to a preset position along the vertical posts of the main frame, and
wherein, the rotation mechanism comprises a rotation frame, a rotation actuating mechanism and a rotation driving mechanism, wherein the rotation frame is arranged under the elevator frame, and can rotate around an axis of the rotation frame on the elevator frame; the rotation actuating mechanism actuates the rotation driving mechanism according to a console command to rotate the rotation frame around the axis of the rotation frame on the elevator frame by a preset angle.

Further, the battery replacement device also comprises a console for issuing console commands, coupled to the positioning mechanism, the rotation mechanism, the lateral movement mechanism and the push-pull mechanism.

Further, the horizontal positioning mechanism comprises movement wheels, a movement actuating mechanism and a movement driving mechanism, wherein the movement wheels are arranged under the bottom of the main frame; the movement actuating mechanism actuates the movement driving mechanism according to a console command to slide the main frame with the movement wheels to a preset position along the horizontal guide rail on the ground.

Further, the lateral movement mechanism comprises a lateral movement frame, a lateral movement actuating mechanism and a lateral movement driving mechanism, wherein the lateral movement frame is arranged on the rotation frame and can move laterally along the rotation frame in a direction vertical to the horizontal guide rail; the lateral movement actuating mechanism actuates the lateral movement driving mechanism according to a console command to move the lateral movement frame laterally by a preset distance in a direction vertical to the horizontal guide rail.

Further, the push-pull mechanism comprises a push-pull frame, a push-pull actuating mechanism, a push-pull driving mechanism and an electromagnet, wherein the push-pull frame is arranged movably on the lateral movement frame; the electromagnet is arranged on the push-pull frame for attracting or releasing a battery pack according to a console command; the push-pull actuating mechanism actuates the push-pull driving mechanism according to a console command to cause the push-pull frame to perform a push-pull action along the lateral movement frame.

In order to achieve the above object, a battery replacement system comprising any of the previous battery replacement device is provided, the system further comprising:
a power supply unit for supplying power for the whole battery replacement system;
a charging unit for charging battery packs and putting the charged battery packs into a replacement sequence;
a monitoring and communication unit coupled to the power supply unit, the charging unit, the battery replacement device through a controller area network (CAN) bus, for receiving in real time operation data of a monitored object and achieving operation data storing, processing, displaying, querying and warning functions.

Further, the power supply unit particularly comprises:
an AC inlet cabinet for leading in 2-way AC power supply from outside and switching the 2-way AC power supply;
a AC feeder cabinet for distributing the AC power supply of the AC inlet cabinet and leading it into the charging unit.

Further, the charging unit particularly comprises:
a charging frame for placing a plurality of battery packs;
a power charger cabinet accommodating a plurality of chargers for charging the battery packs on the charging frame.

Further, the charging unit further comprises:
a smoke warning unit, for detecting smoke caused by overcharging or short-circuiting the battery packs on the charging frame and reporting the monitoring and communication unit with a warning signal.

Further, the charging unit further comprises:
a battery information accessing module for accessing battery data recorded by a battery management system in a battery pack;
a charging termination module for according to battery fault information sent by the battery management system terminating the charging operation of the power chargers.

Further, the power charging unit further comprises:
a charging selection module, for when battery data recorded by the battery management system in the battery pack cannot be accessed, selecting not to charge or selecting a constant flow followed by constant voltage charging method.

Further, the charging unit further comprises:
a charging state indication module for displaying the charging state of various battery packs on the charging frame;
a fault warning module for sending fault warning information to the monitoring and communication unit;
a battery information report module for transmitting battery data sent from the battery management system of each battery pack to the monitoring and communication unit.

Further, the monitoring and communication unit comprises:
a data processing module, for receiving in real time operation data of a monitored object and achieving operation data storing, processing, displaying, querying and warning functions;
a remote control module for scheduling a replacement sequence and electric commercial vehicles, and remotely controlling the battery replacement unit and the power charging unit;
a data forwarding module for forwarding the operation data to an upper-level control center.

Based on the above technical solution, the battery replacement device of this invention can improve the stability and the safety of the battery replacement device.

### BRIEF DESCRIPTION OF THE DRAWINGS

The accompanying drawings described herein are given to provide a further understanding of this invention, which are part of this application, but are not limits of this invention, in which:
Fig.1 is a schematic structure diagram of a battery replacement system of an embodiment of this invention;
Fig.2 is a schematic structure diagram of a power supply unit in the battery replacement system embodiment of this invention;
Fig.3 is a schematic structure diagram of a power charging unit in the battery replacement system embodiment of this invention;
Fig.4 is a schematic diagram of monitoring and communication connections of a monitoring and communication unit in the battery replacement system embodiment of this invention;
Fig.5 is a schematic battery replacement flow of the battery replacement system embodiment of this invention;
Fig.6 is a schematic diagram of the planar arrangement of battery replacement stations of the battery replacement system of this invention;
Fig.7 is a schematic structure diagram of a battery replacement device according to an embodiment of this invention;
Fig.8 is a schematic diagram of a battery replacement flow of the battery replacement device embodiment of this invention.

### DETAILED DESCRIPTION OF EMBODIMENTS

The technical solution of this invention will be further described in detail with the accompanying drawings and embodiments.

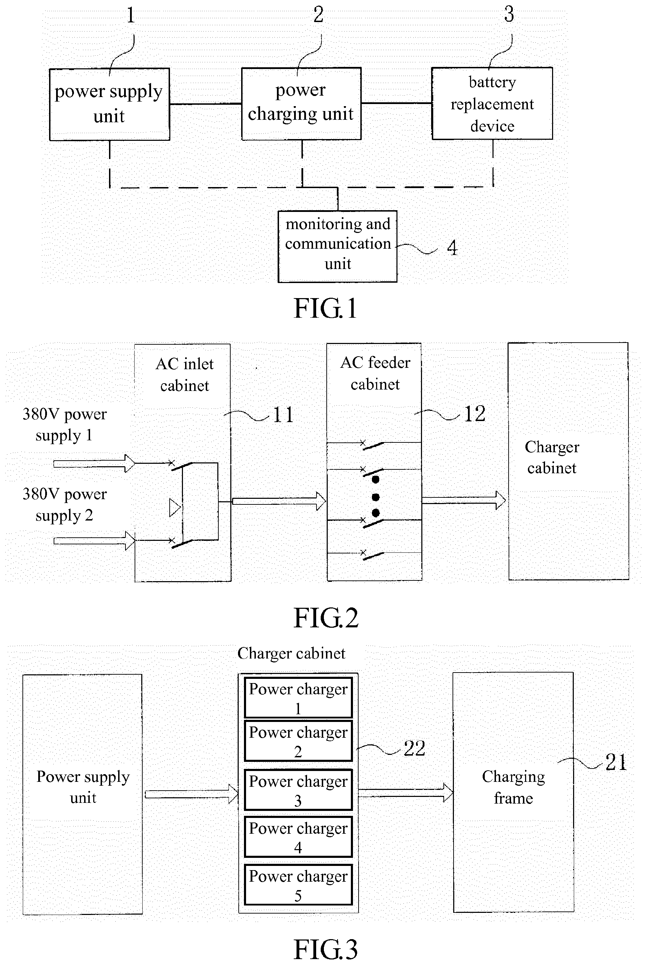

As shown in Fig.1, a schematic structure diagram of a battery replacement system according to an embodiment of this invention. In this embodiment, the battery replacement system comprises a power supply unit 1, a power charging unit 2, a battery replacement device 3 and a monitoring and communication unit 4. Wherein, the power supply unit 1 is responsible for supplying power for the whole battery replacement system; the power charging unit 2 is responsible for charging battery packs available for an electric commercial vehicle and putting the charged battery packs into a replacement sequence. Herein, the replacement sequence refers to information of a plurality of full charged battery packs serving as alternative battery packs for replacement.

The monitoring and communication unit 4 is connected to the power supply unit 1, the power charging unit 2, the battery replacement device 3 through a Controller Area Network (CAN), to monitor and control the power supply unit 1, the power charging unit 2, the battery replacement device 3, receive operation data from a monitored object in real time, and achieve data storing, processing, displaying, querying and warning functions.

A schematic structure diagram of the power supply unit in a battery replacement system embodiment of this invention is shown in Fig.2. The power supply unit particularly comprises an AC inlet cabinet 11 and an AC feeder cabinet 12. The power supply unit leads in a 2-way AC power supply from outside (for example, three-phase five-wire AC380V), wherein the two ways are spare with each other. The AC inlet cabinet 11 is responsible for leading in the 2-way AC power supply from outside and switching the 2-way AC power supply. The AC feeder cabinet 12 is responsible for distributing the AC power supply of the AC inlet cabinet 11 and leading it into a power charger cabinet of the power charging unit 2. The AC feeder cabinet 12 can distribute the AC power every two power charger cabinets. The power supply unit can not only supply power to the charging unit, but also provide operation power for the battery replacement device and the monitoring and communication unit.

A schematic structure diagram of the power charging unit in the battery replacement system embodiment of this invention is shown in Fig.3. The power charging unit may particularly comprise a charging frame 21 and a power charger cabinet 22. A plurality of battery packs can be placed on the charging frame 21, including battery packs to be charged and full charged battery packs. In the battery replacement process, battery packs in a replacement sequence are exchanged into the electric commercial vehicle, while battery packs in the electric commercial vehicle are placed on the charging frame 21 to wait for charging.

The power charger cabinet 22 comprises multiple power chargers for charging battery packs on the charging frame 21. DC is usually adopted in charging. It is necessary to rectify the AC power supply to obtain a DC working power supply.

Considering that battery packs in the charging frame 21 may be overcharged or short-circuiting, or even fired, in order to find such severe situations timely, a smoke warning unit is provided in the charging frame to detect smoke caused by overcharging or short-circuiting the battery packs in the charging frame, and reporting a warning signal to the monitoring and communication unit.

In another embodiment, the charging unit may further communicate with the battery management system (BMS, for short) in the battery pack to perform more accurate control on the charging process of the battery pack. The charging unit may comprise a battery information access module for accessing battery data recorded by the BMS in the battery pack. The charging unit may further comprise a charging termination module for terminating the charging process of a power charger according to battery fault information sent from the BMS.

If a circuit or interface fault occurs in the BSM of a battery pack, or if battery data recorded by the BMS cannot be accessed normally due to some reason such as a protocol for information interaction with the charging unit, a charging selection module can be provided in the charging unit to select whether to charge and a charging strategy (for example constant current followed by constant voltage) without the control of the BSM, to ensure that the total voltage over the battery pack will not go beyond a predefined upper limit.

In another embodiment, the charging unit may further comprises, but not limited to, a charging state indication module, a fault warning module, or a battery information reporting module as required. The charging state indication module is responsible for displaying the charging state of various battery packs on the charging frame 21. The fault warning module is responsible for sending fault warning information to the monitoring and communication unit. The battery information reporting module is responsible for transmitting battery data sent from the BMS of each battery pack to the monitoring and communication unit.

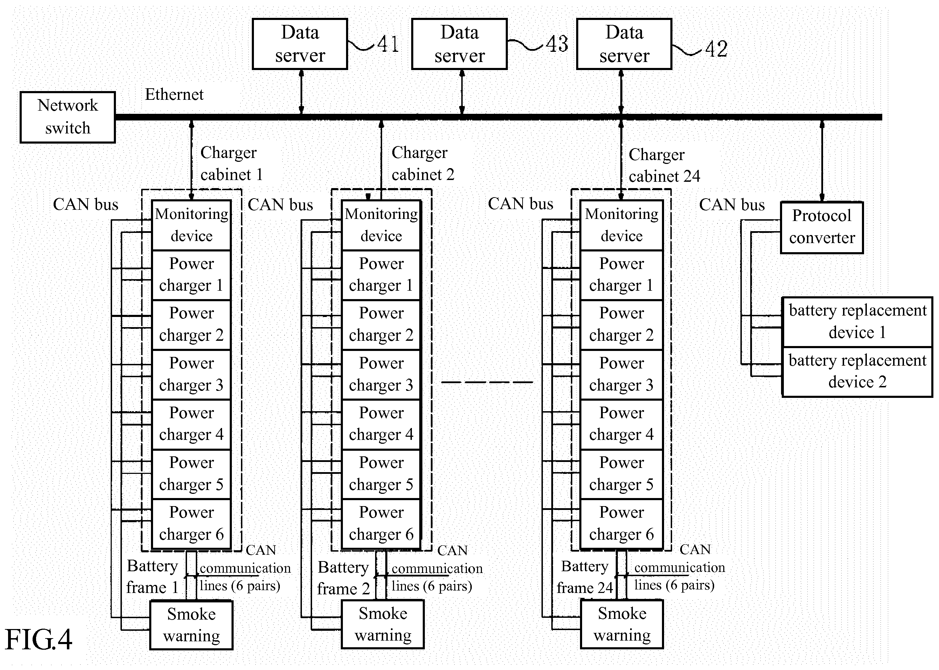

A schematic diagram of monitoring and communication connections of the monitoring and communication unit of the battery replacement system embodiment of this invention is shown in Fig.4. The monitoring and communication unit is connected to the power chargers in each power charger cabinet through a CAN bus; the smoke warning unit is also connected to the monitoring and communication unit through the CAN bus. Related control commands of the monitoring and communication unit can be converted through a protocol converter to dispatch console commands to the battery replacement device.

The monitoring and communication unit may particularly comprise: a data server 41, a monitoring workstation 42 and a WEB server 43. The data server 41 is responsible for receiving operation data of a monitored object and achieving operation data storing, processing, displaying, querying and warning functions in real time. The monitoring workstation 42 is responsible for scheduling the replacement sequence and electric commercial vehicles and remotely controlling the battery replacement device and the charging unit. The WEB server 43 is responsible for forwarding the operation data to an upper-level scheduling center.

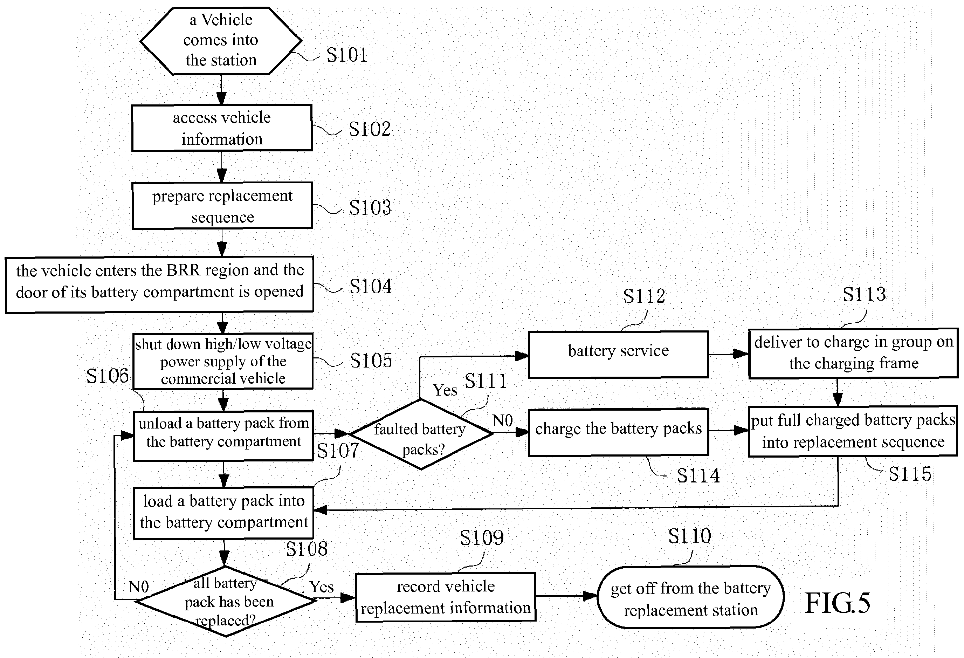

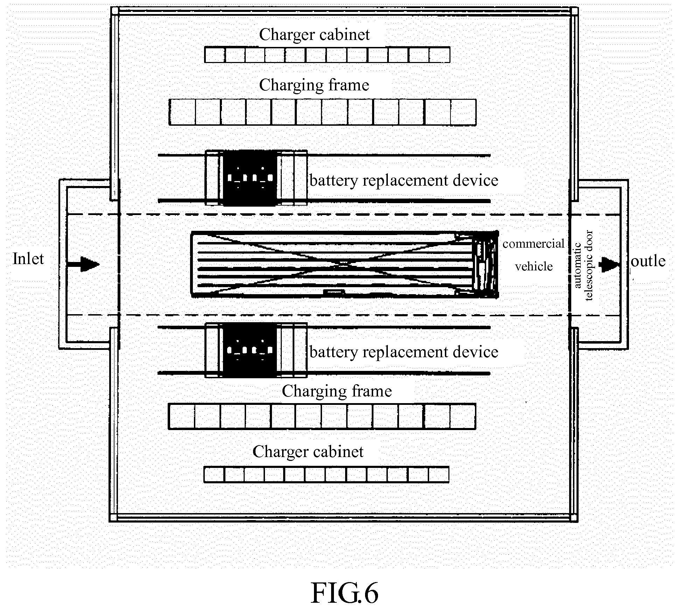

Below, an exemplary battery replacement flow will be given according to the description of the above battery replacement system embodiment. A schematic flow of a battery replacement process of the battery replacement system of this invention is shown in Fig.5. The battery replacement process can be accomplished on battery replacement stations shown in Fig.6, in which because an electric commercial vehicle has a relative large volume, with battery compartments usually arranged on two sides of the vehicle, two sets of battery replacement devices are provided on both sides of the vehicle, as well as corresponding charging frames and power charger cabinets. The battery replacement process comprises the following steps.

Step S101: an electric commercial vehicle came into a battery replacement area according to an instruction.

Step S102: because the electric commercial vehicle has submitted a battery replacement request, the monitoring and communication unit monitors the electric commercial vehicle and read vehicle information of the electric commercial vehicle through a vehicle information recognition device.

Step S103: according to the vehicle information and battery information of battery packs that has been put into a replacement sequence, the monitoring and communication unit prepares a replacement sequence of battery packs to be used in this replacement.

Step S104: after determining the replacement sequence, the monitoring and communication unit issues a schedule command to park the electric commercial vehicle at a battery replacement position convenient for battery replacement; after the electric commercial vehicle is in place, the doors of the battery compartments are opened to prepare for battery replacement.

Step S105: high and low voltage power supply of the whole electric commercial vehicle is shut down.

Step S106: the battery replacement devices take out batteries to be replaced from the battery compartments and unload to the charging frames.

Step S107: the battery replacement devices load full charged battery packs that are pulled out from the replacement sequence into the battery compartments.

Step S108: it is checked whether all battery packs have been replaced; if not all battery packs have been replaced, the process returns to step S106, otherwise step S109 is executed.

Step S109: the monitoring and communication unit records vehicle replacement information of the electric commercial vehicle through the vehicle information recognition device.

Step S110: the electric commercial vehicle gets off the battery replacement region after the battery replacement process has been accomplished.

Step S111: when the replaced battery packs are arranged on the charging frames from the electric commercial vehicle, the charging units communicate with the BMS in the replaced battery packs, read out battery data and transmit to the monitoring and communication unit; the monitoring and communication unit determines there are faulted battery packs, if so step S112 is executed; otherwise step S114 is executed.

Step S112: the faulted battery packs are transported to a maintenance place for fault diagnosis and maintenance, and fault information is recorded.

Step S113: the maintained battery packs are returned to the charging frames and enter the normal charging procedure, after which step S115 is executed.

Step S114: if the monitoring and communication unit has determined that all battery packs are in a normal situation without any fault, a charging procedure begins, in which the battery packs are charged with power chargers.

Step S115: full charged battery packs are put into the replacement sequence waiting for replacement in a later battery replacement process, after which step S107 is executed.

Through the above battery replacement process, it can be seen that all the battery replacement process is controlled by the monitoring and communication unit, without manually scheduling and battery loading/unloading, and thus is more convenient as compared to the prior art, except for its shorter replacement time. Battery replacement efficiency is improved to perform more times of battery replacement per unit time with a shorter battery replacement period, so that power chargers can be used to charge more sufficiently with an increased utilization.

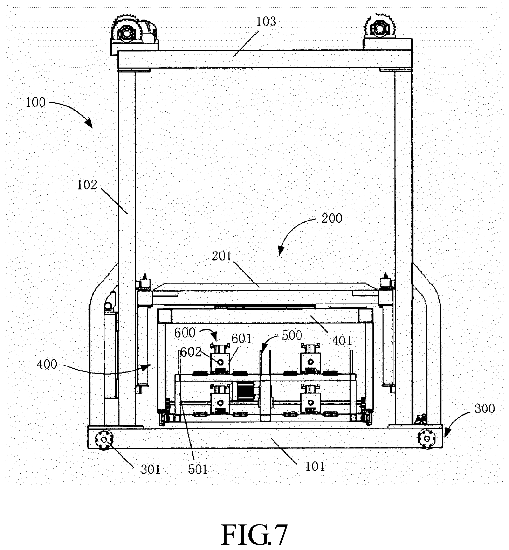

Below, the structure of the battery replacement device according to an embodiment of this invention will be described in detail with reference to Fig.7. The battery replacement device of this embodiment is designed taking the characteristics of electric commercial vehicles into account. Because an electric commercial vehicle has a relatively larger body provided with many battery packs, generally at both sides of the body, in order to improve battery replacement efficiency, the battery replacement device adopts a lateral battery carrying manner.

The battery replacement device may comprise the following components: a main frame 100, a positioning mechanism, a rotation mechanism 400, a lateral movement mechanism 500, and a push-pull mechanism 600. Wherein, the positioning mechanism is composed of a vertical positioning mechanism 200 and a horizontal positioning mechanism 300. The vertical positioning mechanism 200 is provided in the main frame 100, and can slide to a preset position along the vertical posts 102 of the main frame 100 according to a console command. The horizontal positioning mechanism 300 is provided under the main frame 100, and can carry the main frame 100 to a preset position along a horizontal guide rail on the ground according to a console command.

The positioning mechanism is used to move the battery replacement device to a position convenient for battery replacement, for example, the horizontal positioning mechanism moves the battery replacement device to a position where the battery compartment of the electric commercial vehicle are opposite to the battery packs in the replacement sequence on the charging frame, such that it is not required to move the battery replacement device repeatedly during the replacement of battery packs, resulting in improved battery replacement efficiency. The vertical positioning mechanism may make an adjustment according to the height to the ground of the battery compartment and the height of the batteries on the charging frame to facilitate the loading/unloading of battery packs.

The rotation mechanism 400 is provided under the vertical positioning mechanism 200, with a rotation axis on vertical positioning mechanism 200. The rotation mechanism 400 can rotate on the vertical positioning mechanism 200 by a preset angle according to a console command, so as to for example turn a battery pack unloaded from a battery compartment of the electric commercial vehicle and a battery pack unloaded from a charging frame by 180 degrees to facilitate the placement of the battery pack in a more efficient manner.

The lateral movement mechanism 500 is provided on the rotation mechanism 400, and can laterally move to a preset position in a direction vertical to the horizontal guide rail along the rotation mechanism according to a console command. The lateral movement mechanism 500 is provided for the fact that there is a certain space between the battery replacement device and both the battery compartment and the charging frame. In order to successfully unload a battery, the lateral movement mechanism 500 can be used to put the battery pack laterally to a position suitable for the placement of the battery pack. As mentioned previously, the battery compartments are generally provided on lateral sides of the vehicle, two battery replacement devices can be provided on both sides of the electric commercial vehicle. Battery packs are unloaded from the electric commercial vehicle and full battery packs are loaded into the vehicle by the lateral movement mechanism 500.

The push-pull mechanism 600 is provided on the lateral movement mechanism 500, and can perform a push-pull action on a battery pack according to a console command. A battery pack can be held or released in a pure mechanical manner, or with an electromagnet 602 provided on the push-pull mechanism 600. When a battery pack is taken out/put into the electric commercial vehicle laterally, it is very convenient to do so by means of the attractive force of the electromagnet 602, with the advantages of easy to control and relatively simple structure.

Various mechanisms in the battery replacement device can receive commands issued from the external monitoring and communication unit, or a console can be provided inside the battery replacement device, which can be operated by an operator to issue console commands or receive commands from the external monitoring and communication unit, and then convert them to internal console commands for control.

Below, various mechanisms of the battery replacement device will be described. Referring to Fig.7, the main frame 100 comprises a bottom 101, a top frame 103 and multiple vertical posts 102, which are disposed between the bottom 101 and the top frame 103 vertically. The main frame 100 functions as an overall frame of the battery replacement device to provide support for various mechanisms.

The vertical positioning mechanism 200 comprises an elevator frame 201, an elevator actuating mechanism and an elevator driving mechanism. The elevator frame 201 is arranged in a space surrounded by the vertical posts 102 and can slide along the vertical posts 102. The elevator actuating mechanism can actuate the elevator driving mechanism according to a console command, to cause the elevator frame 201 to slide to a preset position along the vertical posts 102 of the main frame 100. The elevator actuating mechanism may be a motor commonly used in engineering, the elevator driving mechanism may be a rack-pinion mechanism to move elevator frame 201 upwards or downwards.

The horizontal positioning mechanism 300 comprises movement wheels 301, a movement actuation mechanism and a movement driving mechanism. The movement wheels 301 are provided under the bottom 101 of the main frame 100. The movement actuation mechanism can actuate the movement driving mechanism according to a console command, to cause the main frame 100 to slide to a preset position along the horizontal guide rail on the ground with the movement wheels. The movement actuation mechanism may be a motor commonly used in engineering, which can drive the movement wheels 301 through the movement driving mechanism (such as through a transmission axis) to slide.

The rotation mechanism 400 comprises a rotation frame 401, a rotation actuating mechanism and a rotation driving mechanism. The rotation frame 401 is provided under the elevator frame 201, and can rotate around a rotation axis of the rotation frame 401 provided on the elevator frame 201. The rotation actuating mechanism can actuate the rotation driving mechanism according to a console command, to cause the rotation frame to rotate by a preset angle around the rotation axis of the rotation frame provided on the elevator frame. The rotation actuating mechanism may be a motor commonly used in engineering. The rotation driving mechanism may be a gear bearing to rotate the rotation frame 401.

The rotation of the rotation mechanism can be accomplished inside the main frame, as compared to a rotation mechanism rotating the main frame, the rotation mechanism rotating inside the main frame used in this embodiment has high stability and is not prone to vibrate or tip due to its small rotation radius. Besides, because the rotation of the battery pack is finished inside the main frame, it is safer than rotating the main frame, and is not prone to endanger the safety of operators surrounding the device; the rotation mechanism adopting such a rotation manner, because it is not prone to be upset, has a base much smaller than that required when the main frame is rotated, and thus the space of the battery replace station can be saved.

The lateral movement mechanism 500 comprises a lateral movement frame 501, a lateral movement actuating mechanism and a lateral movement driving mechanism. The lateral movement frame 501 is provided on the rotation frame 401, and can move laterally along the rotation frame 401 in a direction vertical to the horizontal guide rail. The rotation frame 401 may be provided with a guide or groove in the direction vertical to the horizontal guide rail, and the lateral movement frame 501 can move laterally along the guide or groove. The lateral movement actuating mechanism may actuate the lateral movement driving mechanism according to a console command to cause the lateral movement frame 501 to move a preset distance laterally along the rotation frame 401 in the direction vertical to the horizontal guide rail. The lateral movement actuating mechanism may be motor commonly used in the engineering, and the lateral movement driving mechanism may be a rack-pinion mechanism to move lateral movement frame 401 laterally.

The lateral movement mechanism adopted in this embodiment, as compared to a battery tray structure with a fixed length, can make flexible distance adjustment according to the positions of the charging frame and the vehicle, so as to accurately align the lateral movement frame with the position of the battery pack, so that battery push and pull actions can be performed smoothly with less effort.

The push-pull mechanism 600 comprises a push-pull frame 601, a push-pull actuating mechanism, a push-pull driving mechanism and an electromagnet 602. The push-pull frame 601 is slidably provided on the lateral movement frame 501. The electromagnet 602 is provided on the push-pull frame 601 and can attract and release a battery pack through the electromagnet effect according to a console command. The push-pull actuating mechanism actuates the push-pull driving mechanism according to a console command to make the push-pull frame 601 to perform a push-pull action along the lateral movement frame 501. The push-pull actuating mechanism may be motor commonly used in the engineering, and the push-pull driving mechanism may be a rack-pinion mechanism to push or pull the battery pack. A roller can be provided on the push-pull frame 601 to convert a sliding friction between the battery pack and the push-pull frame 601 to a rolling friction between the rollers, so that the battery pack can be pushed or pulled more smoothly.

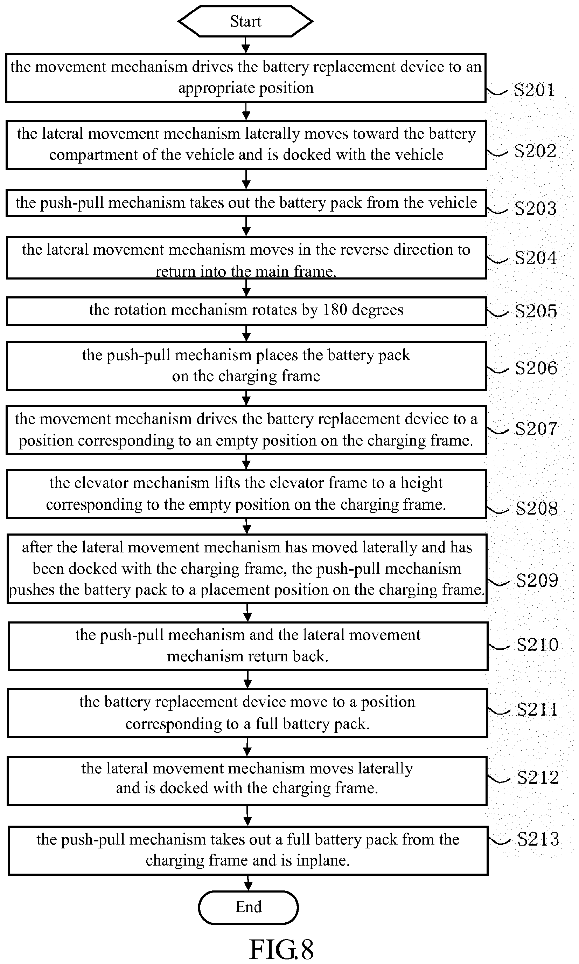

A battery replacement process of the battery replacement device embodiment of this invention will be given below to describe the operation relationships between various mechanisms of the battery replacement device embodiment. A schematic flow of a battery replacement process according to a battery replacement device embodiment is shown in Fig.8. In an initial state, a full battery pack is taken out by the push-pull mechanism on the side of the charging frame, and the push-pull mechanism on the side of the parked vehicle is free. The battery replacement process of the electric commercial vehicle mainly comprise two parts: replacing battery packs in the vehicle and exchanging battery packs with the charging frame, particularly as follows.

Step S201: when a vehicle with batteries to be replaced is in place, a movement mechanism drives the battery replacement device to an appropriate position.

Step S202: the lateral movement mechanism laterally moves toward the battery compartment of the vehicle and is docked with the vehicle.

Step S203: a push-pull mechanism aligned with the battery placement position in the vehicle continues to move toward the battery packs in the battery compartment of the vehicle. After the electromagnet of the push-pull mechanism contacts with a chuck on a battery pack, the push-pull mechanism moves in a reverse direction, and the electromagnet of the push-pull mechanism takes out the battery pack from the vehicle by means of the chuck of the battery pack.

Step S204: after the battery pack has been extracted in place, the lateral movement mechanism moves in the reverse direction to return into the main frame.

Step S205: the rotation mechanism rotates by 180 degrees, so that a full battery pack placed on the pull-push mechanism on the side of the charging frame previously is rotated to the side close to the battery compartment of the vehicle, while the extracted battery pack is rotated to the side close to the charging frame.

Step S206: the lateral movement mechanism at a position aligned with the battery placement position in the vehicle moves toward the vehicle; the push-pull mechanism pushes the battery pack to the battery placement position of the battery compartment of the vehicle by means of the electromagnet; the electromagnet disconnects from the chuck of the battery pack to accomplish the loading of the battery pack, and thus the steps of replacing a battery pack in the vehicle are completed.

Step S207: the movement mechanism drives the battery replacement device to a position corresponding to an empty position on the charging frame.

Step S208: the elevator mechanism lifts the elevator frame to a height corresponding to the empty position on the charging frame.

Step S209: after the lateral movement mechanism has moved laterally and has been docked with the charging frame, the push-pull mechanism pushes the battery pack to a placement position on the charging frame.

Step S210: the push-pull mechanism and the lateral movement mechanism return back.

Step S211: the battery replacement device move to a position corresponding to a full battery pack.

Step S212: the rotation mechanism rotates the rotation frame by 180 degrees, and the elevator mechanism lifts the elevator frame to a height corresponding to the battery pack to be taken out, and the lateral movement mechanism moves laterally and is docked with the charging frame.

Step S213: the push-pull mechanism takes out a full battery pack from the charging frame, the lateral movement mechanism returns back, the elevator frame drops to bottom and waits for a next vehicle with a battery pack to be replaced. Thus, the actions of exchanging a battery pack between the battery replacement device and the charging frame are accomplished.

It can be seen from the above battery replacement process that the battery replacement device can take out a battery pack from the vehicle and put it on the charging frame conveniently. The whole process is completed in an electrical controlled manner, during a short replacement period of time, with high replacement efficiency, without tedious physical labor of operators, and thus leading to a lowered labor cost. In terms of the whole battery replacement system, because of a short battery replacement period, battery replacement can be performed frequently, so that free time of the power chargers can be reduced, and power charger utilization can be improved.

## Claims

1. A battery replacement device suitable for electric commercial vehicles, comprising:
a main frame (100);
a positioning mechanism composed of a vertical positioning mechanism (200) and a horizontal positioning mechanism (300), wherein the vertical positioning mechanism is provided on the main frame, for sliding to a preset position along vertical posts of the main frame according to a console command; the horizontal positioning mechanism (300) is provided under the main frame, for carrying and sliding the main frame along a horizontal guide rail on the ground to a preset position according to a console command;
a rotation mechanism (400) provided under the vertical positioning mechanism, for rotating on the vertical positioning mechanism by a preset angle according to a console command;
a lateral movement mechanism (500) provided on the rotation mechanism, for according to a console command laterally shifting by a preset displacement along the rotation mechanism in a direction vertical to the horizontal guide rail;
a push-pull mechanism (600) provided on the lateral movement mechanism, for according to a console command performing a push-pull action on a battery pack,
wherein the main frame comprises a bottom, a top frame (103) and a plurality of vertical posts vertically arranged between the bottom and top frame,
wherein the vertical positioning mechanism comprises an elevator frame (102), an elevator actuating mechanism and an elevator driving mechanism, wherein the elevator frame is provided in a space surrounded by the vertical posts (102), and can slide along the vertical posts; the elevator actuating mechanism actuates the elevator driving mechanism according to a console command to move the elevator frame to a preset position along the vertical posts of the main frame,
wherein the battery replacement device is **characterised in that** the rotation mechanism (400) comprises a rotation frame (401), a rotation actuating mechanism and a rotation driving mechanism, wherein the rotation frame is arranged under the elevator frame, and can rotate around an axis of the rotation frame on the elevator frame; the rotation actuating mechanism actuates the rotation driving mechanism according to a console command to rotate the rotation frame around the axis of the rotation frame on the elevator frame by a preset angle.

2. The battery replacement device according to claim 1, wherein the battery replacement device also comprises a console for issuing console commands, coupled to the positioning mechanism, the rotation mechanism, the lateral movement mechanism and the push-pull mechanism.

3. The battery replacement device according to claim 1, wherein the horizontal positioning mechanism comprises movement wheels, a movement actuating mechanism and a movement driving mechanism, wherein the movement wheels are arranged under the bottom of the main frame; the movement actuating mechanism actuates the movement driving mechanism according to a console command to slide the main frame with the movement wheels to a preset position along the horizontal guide rail on the ground.

4. The battery replacement device according to claim 1, wherein the lateral movement mechanism comprises a lateral movement frame, a lateral movement actuating mechanism and a lateral movement driving mechanism, wherein the lateral movement frame is arranged on the rotation frame and can move laterally along the rotation frame in a direction vertical to the horizontal guide rail; the lateral movement actuating mechanism actuates the lateral movement driving mechanism according to a console command to move the lateral movement frame laterally along the rotation frame by a preset distance in a direction vertical to the horizontal guide rail.

5. The battery replacement device according to claim 4, wherein the push-pull mechanism comprises a push-pull frame (601), a push-pull actuating mechanism, a push-pull driving mechanism and an electromagnet (602), wherein the push-pull frame is arranged slidably on the lateral movement frame; the electromagnet is arranged on the push-pull frame for attracting or releasing a battery pack according to a console command; the push-pull actuating mechanism actuates the push-pull driving mechanism according to a console command to cause the push-pull frame to perform a push-pull action along the lateral movement frame.

6. A battery replacement system comprising the battery replacement device of any one of claim 1 to claim 5, the system further comprising:
a power supply unit (1) for supplying power for the whole battery replacement system;
a charging unit for charging battery packs and putting the charged battery packs into a replacement sequence;
a monitoring and communication unit coupled to the power supply unit, the charging unit, the battery replacement device through a controller area network (CAN) bus, for receiving in real time operation data of a monitored object and achieving operation data storing, processing, displaying, querying and warning functions.

7. The battery replacement system according to claim 6, wherein the power supply unit comprises:
an AC inlet cabinet for leading in 2-way AC power supply from outside and switching the 2-way AC power supply;
an AC feeder cabinet for distributing the AC power supply of the AC inlet cabinet and leading it into the charging unit.

8. The battery replacement system according to claim 6, wherein the charging unit comprises:
a charging frame for placing a plurality of battery packs;
a power charger cabinet accommodating a plurality of chargers for charging the battery packs on the charging frame.

9. The battery replacement system according to claim 8, wherein the charging unit further comprises:
a smoke warning unit, for detecting smoke caused by overcharging or short-circuiting the battery packs on the charging frame and reporting the monitoring and communication unit with a warning signal.

10. The battery replacement system according to claim 9, wherein the charging unit further comprises:
a battery information accessing module for accessing battery data recorded by a battery management system in a battery pack;
a charging termination module for according to battery fault information sent by the battery management system terminating the charging operation of the power chargers.

11. The battery replacement system according to claim 9, wherein the power charging unit further comprises:
a charging selection module, for when battery data recorded by the battery management system in the battery pack cannot be accessed, selecting not to charge or selecting a constant flow followed by constant voltage charging method.

12. The battery replacement system according to claim 10 or claim 11, wherein the charging unit further comprises:
a charging state indication module for displaying the charging state of various battery packs on the charging frame;
a fault warning module for sending fault warning information to the monitoring and communication unit;
a battery information report module for transmitting battery data sent from the battery management system of each battery pack to the monitoring and communication unit.

13. The battery replacement system according to claim 6, wherein the monitoring and communication unit comprises:
a data server, for receiving in real time operation data of a monitored object and achieving operation data storing, processing, displaying, querying and warning functions;
a monitoring workstation for scheduling a replacement sequence and electric commercial vehicles, and remotely controlling the battery replacement unit and the power charging unit;
a WEB server for forwarding the operation data to an upper-level scheduling center.

## Patentansprüche

1. Batterieaustauschvorrichtung, geeignet für handelsübliche Elektrofahrzeuge, Folgendes umfassend:
einen Hauptrahmen (100),
einen Positionierungsmechanismus, der aus einem vertikalen Positionierungsmechanismus (200) und einem horizontalen Positionierungsmechanismus (300) besteht,
wobei der vertikale Positionierungsmechanismus an dem Hauptrahmen bereitgestellt ist, zum Gleiten in eine voreingestellte Position entlang von vertikalen Ständern des Hauptrahmens gemäß einem Konsolenbefehl, und der horizontale Positionierungsmechanismus (300) unter dem Hauptrahmen bereitgestellt ist, zum Tragen und Gleiten-Lassen des Hauptrahmens entlang einer horizontalen Führungsschiene auf dem Boden gemäß einem Konsolenbefehl in eine voreingestellte Position,
einen Drehmechanismus (400), der unter dem vertikalen Positionierungsmechanismus bereitgestellt ist, zum Drehen um einen voreingestellten Winkel auf dem vertikalen Positionierungsmechanismus gemäß einem Konsolenbefehl,
einen Seitenbewegungsmechanismus (500), der auf dem Drehmechanismus bereitgestellt ist, zum seitlichen Verschieben um eine voreingestellte Verlagerung entlang des Drehmechanismus in eine Richtung vertikal zur horizontalen Führungsschiene gemäß einem Konsolenbefehl
einen Drück-und-Zieh-Mechanismus (600), der auf dem Seitenbewegungsmechanismus bereitgestellt ist, zum Ausführen einer Drück-und-Zieh-Aktion an einem Batteriepack gemäß einem Konsolenbefehl wobei der Hauptrahmen einen Boden, einen oberen Rahmen (103) und mehrere vertikale Ständer umfasst, die vertikal zwischen dem Boden und dem oberen Rahmen angeordnet sind,
wobei der vertikale Positionierungsmechanismus einen Hebegerätrahmen (102),
einen Hebegerät-Betätigungsmechanismus und einen Hebegerät-Antriebsmechanismus umfasst, wobei der Hebegerätrahmen in einem Raum bereitgestellt ist, der von den vertikalen Ständern (102) umschlossen ist und entlang der vertikalen Ständer gleiten kann,
wobei der Hebegerät-Betätigungsmechanismus den Hebegerät-Antriebsmechanismus gemäß einem Konsolenbefehl betätigt, um den Hebegerätrahmen entlang der vertikalen Ständer des Hauptrahmens zu einer voreingestellten Position zu bewegen,
wobei die Batterieaustauschvorrichtung **dadurch gekennzeichnet ist, dass** der Drehmechanismus (400) einen Drehrahmen (401), einen Drehungsbetätigungsmechanismus und einen Drehungsantriebsmechanismus umfasst, wobei der Drehrahmen unter dem Hebegerätrahmen angeordnet ist und um eine Achse des Drehrahmens auf dem Hebegerätrahmen drehen kann, wobei der Drehungsbetätigungsmechanismus den Drehungsantriebsmechanismus gemäß einem Konsolenbefehl betätigt, um den Drehrahmen um die Achse des Drehrahmens auf dem Hebegerätrahmen um einen voreingestellten Winkel zu drehen.

2. Batterieaustauschvorrichtung nach Anspruch 1, wobei die Batterieaustauschvorrichtung außerdem eine Konsole zum Erteilen von Konsolenbefehlen umfasst, die an den Positionierungsmechanismus, den Drehmechanismus, den Seitenbewegungsmechanismus und den Drück-und-Zieh-Mechanismus gekoppelt ist.

3. Batterieaustauschvorrichtung nach Anspruch 1, wobei der horizontale Positionierungsmechanismus Bewegungsräder, einen Bewegungsbetätigungsmechanismus und einen Bewegungsantriebsmechanismus umfasst, wobei die Bewegungsräder unter dem Boden des Hauptrahmens angeordnet sind, wobei der Bewegungsbetätigungsmechanismus den Bewegungsantriebsmechanismus gemäß einem Konsolenbefehl betätigt, um den Hauptrahmen mit den Bewegungsrädern entlang der horizontalen Führungsschiene auf dem Boden zu einer voreingestellten Position gleiten zu lassen.

4. Batterieaustauschvorrichtung nach Anspruch 1, wobei der Seitenbewegungsmechanismus einen Seitenbewegungsrahmen, einen Seitenbewegungs-Betätigungsmechanismus und einen Seitenbewegungs-Antriebsmechanismus umfasst, wobei der Seitenbewegungsrahmen auf dem Drehrahmen angeordnet ist und sich seitlich entlang des Drehrahmens in eine Richtung vertikal zur horizontalen Führungsschiene bewegen kann, wobei der Seitenbewegungs-Betätigungsmechanismus den Seitenbewegungs-Antriebsmechanismus gemäß einem Konsolenbefehl betätigt, um den Seitenbewegungsrahmen seitlich entlang des Drehrahmens um eine voreingestellte Stecke in eine Richtung vertikal zur horizontalen Führungsschiene zu bewegen.

5. Batterieaustauschvorrichtung nach Anspruch 4, wobei der Drück-und-Zieh-Mechanismus einen Drück-und-Zieh-Rahmen (601), einen Drück-und-Zieh-Betätigungsmechanismus, einen Drück-und-Zieh-Antriebsmechanismus und einen Elektromagneten (602) umfasst, wobei der Drück-und-Zieh-Rahmen gleitfähig auf dem Seitenbewegungsrahmen angeordnet ist, wobei der Elektromagnet für das Anziehen oder Freigeben eines Batteriepacks gemäß einem Konsolenbefehl auf dem Drück-und-Zieh-Rahmen angeordnet ist, wobei der Drück-und-Zieh-Betätigungsmechanismus den Drück-und-Zieh-Antriebsmechanismus gemäß einem Konsolenbefehl betätigt, um den Drück-und-Zieh-Rahmen zu veranlassen, eine Drück-und-Zieh-Aktion entlang des Seitenbewegungsrahmens auszuführen.

6. Batterieaustauschsystem, die Batterieaustauschvorrichtung nach einem der Ansprüche 1 bis 5 umfassend, wobei das System ferner Folgendes umfasst:
eine Energieversorgungseinheit (1), um das gesamte Batterieaustauschsystem mit Energie zu versorgen,
eine Ladeeinheit, um Batteriepacke zu laden und die geladenen Batteriepacke in eine Austauschabfolge zu versetzen,
eine Überwachungs- und Kommunikationseinheit, die über einen CAN-(Controller-Area-Network-)Bus mit der Energieversorgungseinheit, der Ladeeinheit und der Batterieaustauschvorrichtung gekoppelt ist, um Echtzeit-Betriebsdaten eines überwachten Objekts zu empfangen und Betriebsdatenspeicherungs-, -verarbeitungs-, -anzeige-, -abfrage- und -warnungsfunktionen zu erzielen.

7. Batterieaustauschsystem nach Anspruch 6, wobei die Energieversorgungseinheit Folgendes umfasst:
eine Wechselstrom-Eingangszelle, um eine 2-Wege-Wechselstrom-Energieversorgung von außerhalb einzuführen und die 2-Wege-Wechselstrom-Energieversorgung zu schalten,
eine Wechselstrom-Einspeisungszelle, um die Wechselstrom-Energieversorgung der Wechselstrom-Eingangszelle zu verteilen und in die Ladeeinheit zu führen.

8. Batterieaustauschsystem nach Anspruch 6, wobei die Ladeeinheit Folgendes umfasst:
einen Laderahmen zum Platzieren mehrerer Batteriepacke,
eine Energieladezelle, die mehreren Ladegeräten zum Laden der Batteriepacke auf dem Laderahmen Platz bietet.

9. Batterieaustauschsystem nach Anspruch 8, wobei die Ladeeinheit ferner Folgendes umfasst:
eine Rauchmeldeeinheit zum Erkennen von Rauch, der durch Überladen oder Kurzschließen der Batteriepacke auf dem Laderahmen verursacht wird, und Ausgeben eines Warnsignals an die Überwachungs- und Kommunikationseinheit.

10. Batterieaustauschsystem nach Anspruch 9, wobei die Ladeeinheit ferner Folgendes umfasst:
ein Batterieinformationen-Zugriffsmodul zum Zugreifen auf Batteriedaten, die durch ein Batterieverwaltungssystem in einem Batteriepack aufgezeichnet wurden,
ein Ladungsbeendigungsmodul zum Beenden des Ladebetriebs der Energieladegeräte gemäß Batteriefehlerinformationen, die von dem Batterieverwaltungssystem gesendet werden.

11. Batterieaustauschsystem nach Anspruch 9, wobei die Energieladeeinheit ferner Folgendes umfasst:
ein Ladeauswahlmodul zum Auswählen eines Nichtladens oder zum Auswählen eines konstanten Stromes, gefolgt von einem Ladeverfahren mit konstanter Spannung, wenn auf Batteriedaten, die durch das Batterieverwaltungssystem in dem Batteriepack aufgezeichnet wurden, nicht zugegriffen werden kann.

12. Batterieaustauschsystem nach Anspruch 10 oder 11, wobei die Ladeeinheit ferner Folgendes umfasst:
ein Ladezustands-Anzeigemodul zum Anzeigen des Ladezustandes verschiedener Batteriepacke auf dem Laderahmen,
ein Fehlermeldungsmodul zum Senden von Fehlermeldungsinformationen an die Überwachungs- und Kommunikationseinheit,
ein Batterieinformationen-Ausgabemodul zum Übertragen von Batteriedaten, die von dem Batterieverwaltungssystem jedes Batteriepacks an die Überwachungs- und Kommunikationseinheit gesendet werden.

13. Batterieaustauschsystem nach Anspruch 6, wobei die Überwachungs- und Kommunikationseinheit Folgendes umfasst:
einen Datenserver zum Empfangen von Betriebsdaten eines überwachten Objekts in Echtzeit und zum Erzielen von Betriebsdatenspeicherungs-, -verarbeitungs-, -anzeige-, -abfrage- und -warnungsfunktionen,
eine Überwachungsarbeitsstation zum Planen einer Austauschabfolge und von handelsüblichen Elektrofahrzeugen und zum Fernsteuern der Batterieaustauscheinheit und der Energieladeeinheit,
einen WEB-Server zum Weiterleiten der Betriebsdaten an ein übergeordnetes Planungszentrum.

## Revendications

1. Dispositif de remplacement de batterie adapté à des véhicules commerciaux électriques, comprenant :
un cadre principal (100) ;
un mécanisme de positionnement composé d'un mécanisme de positionnement vertical (200) et d'un mécanisme de positionnement horizontal (300),
dans lequel le mécanisme de positionnement vertical est prévu sur le cadre principal, pour glisser vers une position prédéfinie le long de montants verticaux du cadre principal selon une commande de console ; le mécanisme de positionnement horizontal (300) est prévu sous le cadre principal, pour supporter et faire glisser le cadre principal le long d'un rail de guidage horizontal sur le sol vers une position prédéfinie selon une commande de console ;
un mécanisme de rotation (400) prévu sous le mécanisme de positionnement vertical, pour tourner sur le mécanisme de positionnement vertical d'un angle prédéfini selon une commande de console ;
un mécanisme de mouvement latéral (500) prévu sur le mécanisme de rotation, pour assurer un décalage latéral, selon une commande de console, d'un déplacement prédéfini le long du mécanisme de rotation dans une direction verticale au rail de guidage horizontal ;
un mécanisme de poussée-traction (600) prévu sur le mécanisme de mouvement latéral, pour effectuer, selon une commande de console, une action de poussée-traction sur un bloc-batteries,
dans lequel le cadre principal comprend un fond, un cadre supérieur (103) et une pluralité de montants verticaux agencés verticalement entre le fond et le cadre supérieur,
dans lequel le mécanisme de positionnement vertical comprend un cadre élévateur (102), un mécanisme d'actionnement élévateur et un mécanisme d'entraînement élévateur, dans lequel le cadre élévateur est prévu dans un espace entouré par les montants verticaux (102), et peut glisser le long des montants verticaux ;
le mécanisme d'actionnement élévateur actionne le mécanisme d'entraînement élévateur selon une commande de console pour déplacer le cadre élévateur vers une position prédéfinie le long des montants verticaux du cadre principal,
le dispositif de remplacement de batterie étant **caractérisé en ce que** le mécanisme de rotation (400) comprend un cadre de rotation (401), un mécanisme d'actionnement de rotation et un mécanisme d'entraînement en rotation, dans lequel le cadre de rotation est agencé sous le cadre élévateur, et peut tourner autour d'un axe du cadre de rotation sur le cadre élévateur ; le mécanisme d'actionnement de rotation actionne le mécanisme d'entraînement en rotation selon une commande de console pour faire tourner le cadre de rotation autour de l'axe du cadre de rotation sur le cadre élévateur d'un angle prédéfini.

2. Dispositif de remplacement de batterie selon la revendication 1, le dispositif de remplacement de batterie comprenant également une console pour émettre des commandes de console, couplée au mécanisme de positionnement, au mécanisme de rotation, au mécanisme de mouvement latéral et au mécanisme de poussée-traction.

3. Dispositif de remplacement de batterie selon la revendication 1, dans lequel le mécanisme de positionnement horizontal comprend des roues de mouvement, un mécanisme d'actionnement de mouvement et un mécanisme d'entraînement de mouvement, dans lequel les roues de mouvement sont agencées sous le fond du cadre principal ; le mécanisme d'actionnement de mouvement actionne le mécanisme d'entraînement de mouvement selon une commande de console pour faire glisser le cadre principal avec les roues de mouvement vers une position prédéfinie le long du rail de guidage horizontal sur le sol.

4. Dispositif de remplacement de batterie selon la revendication 1, dans lequel le mécanisme de mouvement latéral comprend un cadre de mouvement latéral, un mécanisme d'actionnement de mouvement latéral et un mécanisme d'entraînement de mouvement latéral, dans lequel le cadre de mouvement latéral est agencé sur le cadre de rotation et peut se déplacer latéralement le long du cadre de rotation dans une direction verticale par rapport au rail de guidage horizontal ; le mécanisme d'actionnement de mouvement latéral actionne le mécanisme d'entraînement de mouvement latéral selon une commande de console pour déplacer le cadre de mouvement latéral latéralement le long du cadre de rotation d'une distance prédéfinie dans une direction verticale au rail de guidage horizontal.

5. Dispositif de remplacement de batterie selon la revendication 4, dans lequel le mécanisme de poussée-traction comprend un cadre de poussée-traction (601), un mécanisme d'actionnement de poussée-traction, un mécanisme d'entraînement de poussée-traction et un électroaimant (602), dans lequel le cadre de poussée-traction est agencé de manière à glisser sur le cadre de mouvement latéral ; l'électroaimant est agencé sur le cadre de poussée-traction pour attirer ou relâcher un bloc-batteries selon une commande de console ; le mécanisme d'actionnement de poussée-traction actionne le mécanisme d'entraînement de poussée-traction selon une commande de console pour amener le cadre de poussée-traction à effectuer une action de poussée-traction le long du cadre de mouvement latéral.

6. Système de remplacement de batterie comprenant le dispositif de remplacement de batterie selon l'une quelconque des revendications 1 à 5, le système comprenant en outre :
une unité d'alimentation électrique (1) pour fournir une alimentation électrique pour l'ensemble du système de remplacement de batterie ;
une unité de charge pour charger les blocs-batteries et placer les blocs-batteries chargés dans une séquence de remplacement ;
une unité de surveillance et de communication couplée à l'unité d'alimentation, à l'unité de charge, au dispositif de remplacement de batterie par le biais d'un bus de réseau CAN, pour recevoir des données de fonctionnement en temps réel d'un objet surveillé et obtenir des fonctions de stockage, de traitement, d'affichage, de demande et de signalisation de données de fonctionnement.

7. Système de remplacement de batterie selon la revendication 6, dans lequel l'unité d'alimentation électrique comprend :
une armoire d'entrée de CA pour introduire une alimentation électrique en CA bidirectionnelle depuis l'extérieur et commuter l'alimentation électrique en CA bidirectionnelle ;
une armoire de fourniture de CA pour distribuer l'alimentation électrique en CA de l'armoire d'entrée de CA et la conduire dans l'unité de charge.

8. Système de remplacement de batterie selon la revendication 6, dans lequel l'unité de charge comprend :
un cadre de charge pour mettre en place une pluralité de blocs-batterie ;
une armoire de chargeur électrique logeant une pluralité de chargeurs pour charger les blocs-batteries sur le cadre de charge.

9. Système de remplacement de batterie selon la revendication 8, dans lequel l'unité de charge comprend en outre :
une unité de détection de fumée, pour détecter de la fumée causée par une surcharge ou un court-circuit des blocs-batteries sur le cadre de charge et rapporter à l'unité de surveillance et de communication un signal d'alarme.

10. Système de remplacement de batterie selon la revendication 9, dans lequel l'unité de charge comprend en outre :
un module d'accès à des informations de batterie pour accéder à des données de batterie enregistrées par un système de gestion de batterie dans un bloc-batteries ;
un module de fin de charge pour mettre fin, selon des informations de panne de batterie envoyées par le système de gestion de batterie, à l'opération de charge des chargeurs électriques.

11. Système de remplacement de batterie selon la revendication 9, dans lequel l'unité de charge électrique comprend en outre :
un module de sélection de charge pour choisir, lorsqu'il est impossible d'accéder aux données de batterie enregistrées par le système de gestion de batterie dans le bloc-batteries, de ne pas charger ou choisir un procédé de charge à flux constant suivi par une tension constante.

12. Système de remplacement de batterie selon la revendication 10 ou la revendication 11, dans lequel l'unité de charge comprend en outre :
un module d'indication d'état de charge pour afficher l'état de charge de divers blocs-batteries sur le cadre de charge ;
un module de signalisation de panne pour envoyer des informations de signalisation de panne à l'unité de surveillance et de communication :
un module de rapport d'informations de batterie pour transmettre des données de batterie envoyées par le système de gestion de batterie de chaque bloc-batteries à l'unité de surveillance et de communication.

13. Système de remplacement de batterie selon la revendication 6, dans lequel l'unité de surveillance et de communication comprend :
un serveur de données, pour recevoir en temps réel des données de fonctionnement d'un objet surveillé et obtenir des fonctions de stockage, de traitement, d'affichage, de demande et de signalisation de données de fonctionnement ;
un poste de travail de surveillance pour planifier une séquence de remplacement et des véhicules commerciaux électriques, et commander à distance l'unité de remplacement de batterie et l'unité de charge électrique ;
un serveur WEB pour transmettre les données de fonctionnement à un centre de planification de niveau supérieur.
